# EUROPEAN PATENT APPLICATION

(11) **EP 2 506 620 A1**
(43) Date of publication of application: **03.10.2012**
(21) Application number: 11739352.0
(22) Date of filing: 18.01.2011
(51) Int. Cl.: H04W 12/12

(54) **METHOD AND APPARATUS FOR FILTERING MALICIOUS CALLING COMPLETION INDICATING AND NETWORK DEVICE OF CALLING SIDE THEREOF**

(30) Priority: 02.02.2010 CN 201010110354
(71) Applicant: ZTE Corporation, Shenzhen, Guangdong 518057 (CN)
(72) Inventor: GAO, Yang, Shenzhen Guangdong 518057 (CN); ZHANG, Shaolian, Shenzhen Guangdong 518057 (CN); HU, Yi, Shenzhen Guangdong 518057 (CN); ZHANG, Chongzheng, Shenzhen Guangdong 518057 (CN)
(74) Representative: Jansen, Cornelis Marinus
(86) International application number: PCT/CN2011/070368
(87) International publication number: WO 2011/095073

(57) **Abstract**

A method for filtering a malicious call completion indicator in a CCBS service is provided, in which a calling-side network device rejects the current call request or removes the call completion indicator information from the call request and then forwards the call request, when determining the call request carries the information. The disclosure also provides a corresponding apparatus, which includes a reception unit configured to receive a call request, a detection unit configured to detect the call request and to trigger the rejection unit when determining that the call request carries call completion indicator information and a rejection unit configured to reject the current call request. A calling-side network device is also provided. According to the disclosure, the sequence for accessing the calls from calling subscribers to a called subscriber is well kept, thus assuring fairness of the call access and avoiding preferential call access of malicious subscribers.

## Description

### TECHNICAL FIELD

The disclosure relates to the call completion to busy subscriber (CCBS) service processing technique, and in particular to a method and an apparatus for filtering a malicious call completion indicator in the CCBS service and a calling-side network device.

### BACKGROUND

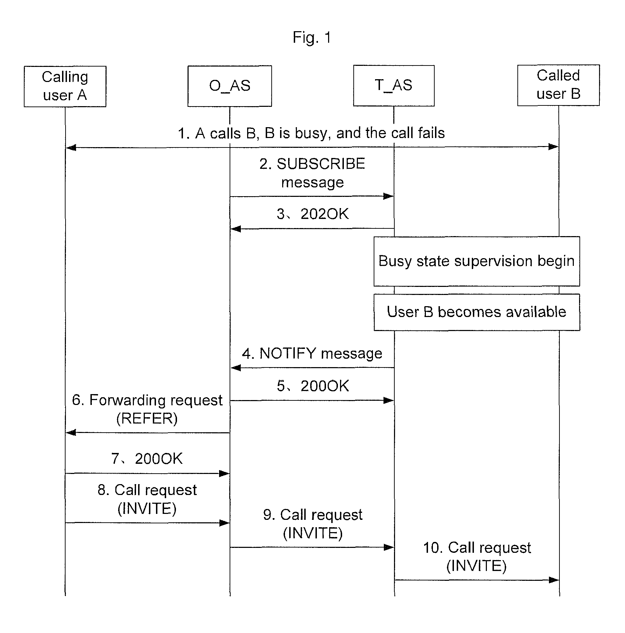

Fig. 1 shows a flowchart of the existing CCBS service. As shown in Fig. 1, the flowchart of the existing CCBS service comprises the following steps:
Step 1: a calling user A calls a called user B, and the called user B rejects the call request from the calling user A due to busy line.
Step 2: an application server (AS) at the calling side (O_AS) sends a SUBSCRIBE message to the AS at the called side (T_AS) to subscribe the idle state of the called user.
Step 3: after receiving the SUBSCRIBE message sent from the O_AS, the T_AS returns a 2020K message to the O_AS to acknowledge the reception of SUBSCRIBE message.

After Step 3, the T_AS begins to perform busy state supervision on the called user B. When it is detected that the current state of the user B becomes available, Step 4 is performed.

Step 4: when the called user is idle, the T_AS traverses the list of the calling-side ASs subscribing the idle state of the called user and sends a NOTIFY message to the first calling AS subscribing the idle state of the called user.

Step 5: after receiving the NOTIFY message, the O_AS returns a 2000K acknowledgment message to the T_AS.

Step 6 to Step 10: the O_AS notifies the calling user to initiate a call-back request (INVITE) in a REFER form and inserts call completion indicator information into the call request of the calling user A; or, the O_AS starts a 3rd party call control (3PCC) flow, in which a call request (INVITE) is sent to the called user, and the O_AS inserts call completion indicator information into the call request.

After receiving the call request (INVITE), the T_AS judges whether the call request (INVITE) carries the call completion indicator information, if yes, the T_AS forwards the call request to the called user B, and if not, the T_AS rejects the current call request by using a 486 (busy here) failure response.

If the T_AS allows this call, the T_AS continues to perform the following processing flow to finish this call.

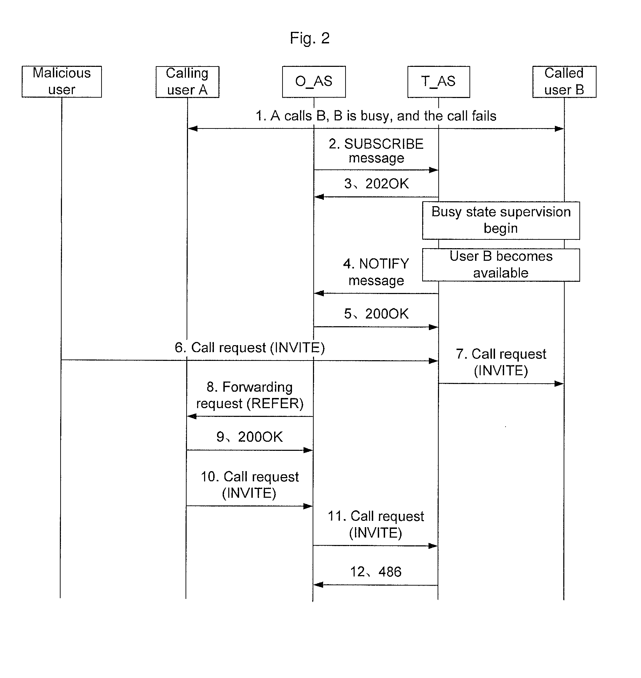

Fig. 2 shows a flowchart of malicious calling based on the Fig. 1. As shown in Fig. 2, a malicious calling user performs a malicious call specifically in the following way:
Step 1 to Step 5: they are completely the same as Step 1 to Step 5 shown in Fig. 1. The description of the implementation details is omitted here.
Step 6: a malicious user sends a call request (INVITE) to the T_AS, wherein the malicious user inserts call completion indicator information into the call request initiated by the malicious user itself; the T_AS processes the call initiated by the malicious user as if it is the calling user A shown in Step 1 to Step 5 above, that is, the call request of the current malicious user is processed as that of a user of the CCBS service.
Step 7: the T_AS forwards the call request of the malicious user to the called user B and then performs call access.

In this way, the malicious user implements the call access to the called user B prior to the user A.

Step 8 to Step 12: they are corresponding to the processing flows shown in Fig. 1. The description of the implementation details is omitted here.

It can be known from Fig. 2 that if the malicious user inserts a call completion indicator into the call request by himself, the calling-side network device will not filter the call completion indicator, but will allow the transmission of the call request (INVITE) carrying call completion indicator information of the malicious user to the T_AS to establish a call. In this way, the calling user who initiates subscription first cannot perform the call first, but later than those who initiates the subscription later. In this way, it is another way of saying that the malicious user jumps a queue. Obviously, it goes against call fairness, and would influence a normal call of a normal user in severe cases.

### SUMMARY

In view of the above, the main object of the disclosure is to provide a method and an apparatus for filtering a malicious call completion indicator in the CCBS service and a calling-side network device, capable of filtering out the call request carrying malicious call completion indicator information.

In order to achieve the object above, the technical scheme of the disclosure is implemented as follows.

A method for filtering a malicious call completion indicator in a CCBS service, includes the following steps:
when a calling-side network device determines that a call request carries call completion indicator information, the calling-side network device rejects the current call request, or removes the call completion indicator information from the call request and then forwards the call request.

Preferably, the calling-side network device comprises at least one of a serving call session control function entity (S-CSCF), a proxy call session control function entity (P-CSCF), a media gateway control function (MGCF), an access gateway control function entity (AGCF) and an application server (AS).

An apparatus for filtering a malicious call completion indicator in a CCBS service, includes a reception unit, a detection unit and a rejection unit, wherein
the reception unit is configured to receive a call request;
the detection unit is configured to detect the call request and to trigger the rejection unit when determining that the call request carries call completion indicator information; and
the rejection unit is configured to reject the current call request.

An apparatus for filtering a malicious call completion indicator in a CCBS service, includes a reception unit, a detection unit, a removal unit and a forwarding unit, wherein
the reception unit is configured to receive a call request;
the detection unit is configured to detect the call request and to trigger the removal unit when determining that the call request carries call completion indicator information;
the removal unit is configured to remove the call completion indicator information from the call request; and
the forwarding unit is configured to forward the call request which has been processed by the removal unit.

A calling-side network device, includes a reception unit, a detection unit and a rejection unit, wherein
the reception unit is configured to receive a call request;
the detection unit is configured to detect the call request and to trigger the rejection unit when determining that the call request carries call completion indicator information; and
the rejection unit is configured to reject the current call request.

Preferably, the calling-side network device comprises at least one of
a serving call session control function entity (S-CSCF), a proxy call session control function entity (P-CSCF), a media gateway control function (MGCF), an access gateway control function entity (AGCF) and an application server (AS).

A calling-side network device, includes a reception unit, a detection unit, a removal unit and a forwarding unit, wherein
the reception unit is configured to receive a call request;
the detection unit is configured to detect the call request and to trigger the removal unit when determining that the call request carries call completion indicator information;
the removal unit is configured to remove the call completion indicator information from the call request; and
the forwarding unit is configured to forward the call request which has been processed by the removal unit.

Preferably, the calling-side network device comprises at least one of a serving call session control function entity (S-CSCF), a proxy call session control function entity (P-CSCF), a media gateway control function (MGCF), an access gateway control function entity (AGCF) and an application server (AS).

In the disclosure, a filtering mechanism for a call request is provided in the calling-side network device; the call request initiated by a calling user is detected, and when it is determined that the call request carries the call completion indicator information, the call request is rejected, or the call completion indicator information is deleted from the call request and then the call request is forwarded. According to the disclosure, the sequence for accessing the calls from calling subscribers to a called subscriber is well kept, thus assuring the fairness of the call access and avoiding preferential call access of malicious subscribers.

### BRIEF DESCRIPTION OF THE DRAWINGS

Fig. 1 shows a flowchart of the existing CCBS service;
Fig. 2 shows a flowchart of malicious calling based on the Fig. 1;
Fig. 3 shows a flowchart of filtering malicious call completion indicator in the CCBS service according to method Embodiment 1 of the disclosure;
Fig. 4 shows a flowchart of filtering malicious call completion indicator in the CCBS service according to method Embodiment 2 of the disclosure;
Fig. 5 shows a flowchart of filtering malicious call completion indicator in the CCBS service according to method Embodiment 3 of the disclosure;
Fig. 6 shows a flowchart of filtering malicious call completion indicator in the CCBS service according to method Embodiment 4 of the disclosure;
Fig. 7 shows a schematic diagram of a structure of the device for filtering malicious call completion indicator in the CCBS service according to the disclosure; and
Fig. 8 shows a schematic diagram of another structure of the device for filtering malicious call completion indicator in the CCBS service according to the disclosure.

### DETAILED DESCRIPTION

The basic principle of the disclosure lies in that, a filtering mechanism for a call request is provided in the calling-side network device; the call request initiated by a calling user is detected, and when it is determined that the call request carries the call completion indicator information, the call request is rejected, or the call completion indicator information is deleted from the call request and then the call request is forwarded. According to the disclosure, the sequence for accessing the calls from calling subscribers to a called subscriber is well kept, thus assuring the fairness of the call access and avoiding preferential call access of malicious subscribers.

For better understanding the purpose, the technical scheme and the advantages of the disclosure, embodiments are provided below to illustrate the disclosure in detail by reference to the accompanying drawings.

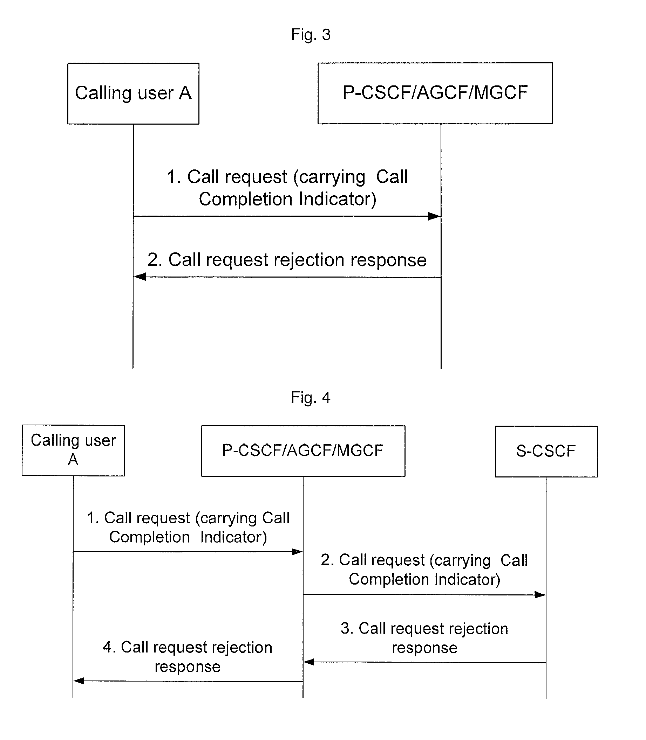

Fig. 3 shows a flowchart of filtering malicious call completion indicator in the CCBS service according to method Embodiment 1 of the disclosure. As shown in Fig. 3, the method of filtering malicious call completion indicator in the CCBS service according to the disclosure includes the following steps:
Step 1: the calling user A sends a call request (INVITE) to the called side AS through a calling-side network device in an IP multimedia subsystem (IMS) network, wherein the call request carries the call completion indicator information. the network device of the calling side of the IMS network includes but not limited to Proxy Call Session Control Function (P-CSCF), Media Gateway Control Function (MGCF), and Access Gateway Control Function (AGCF), etc.

In the disclosure, a detection mechanism for call request is provided in the calling-side network device in the IMS network to detect the call request initiated by the user; when it is determined that the call request carries the call completion indicator information, Step 2 is performed.

In the disclosure, a resolution function for call request is added to the calling-side network device in the IMS network, so as to determine whether the call request carries the call completion indicator information.

Step 2: it is refused to provide a response to this call request; that is, this call request is rejected.

Fig. 4 shows a flowchart of filtering malicious call completion indicator in the CCBS service according to method Embodiment 2 of the disclosure. As shown in Fig. 4, in the example, a detection function for the call request of the calling user A is provided in the Serving Call Session Control Function (S-CSCF). The detection is performed in a same way as shown in Fig. 3. The method specifically comprises the following steps:
Step 1: the calling user A initiates a call request to the P-CSCF/MGCF/AGCF, wherein the call request carries a call completion indicator.
Step 2: the P-CSCF/MGCF/AGCF sends the call request to the S-CSCF in a transparent transmission mode.
Step 3: the S-CSCF resolves and detects the received call request, and sends a call request rejection response to the P-CSCF/MGCF/AGCF to reject this call when determining that the call request carries the call completion indicator; or, the S-CSCF detects the field corresponding to the call completion indicator in the call request, when the call request contains the field, it is indicated that the call request contains the call completion indicator.
Step 4: the P-CSCF/MGCF/AGCF forwards the call request rejection response to the calling user A.

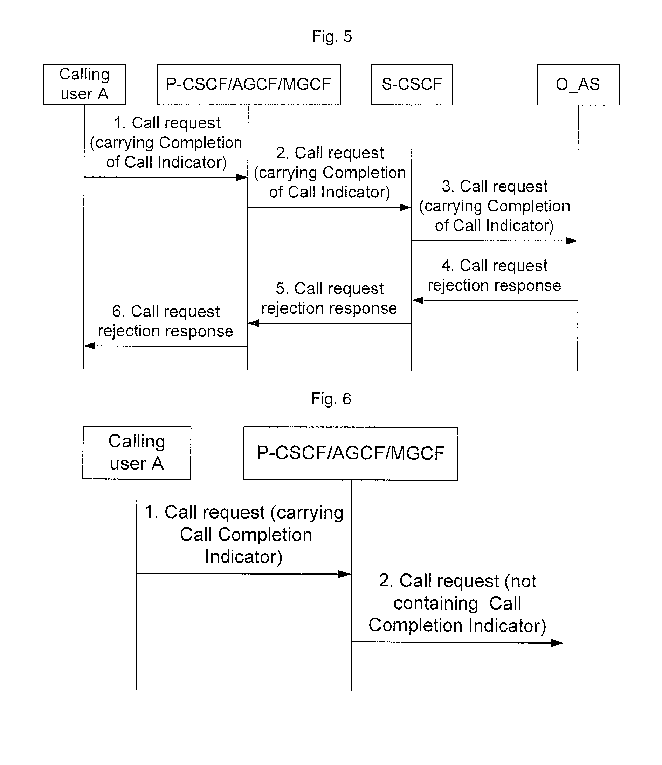

Fig. 5 shows a flowchart of filtering malicious call completion indicator in the CCBS service according to method Embodiment 3 of the disclosure. As shown in Fig. 5, in the example, the detection function for the call request of the calling user A is provided in the O-AS. The detection is performed in a same way as shown in Figs. 3 and 4. The method specifically comprises the following steps:
Step 1: the calling user A initiates a call request to the P-CSCF/MGCF/AGCF, wherein the call request carries a call completion indicator.
Step 2: the P-CSCF/MGCF/AGCF sends the call request to the S-CSCF in a transparent transmission mode.
Step 3: the S-CSCF sends the call request to the O_AS in a transparent transmission mode.
Step 4: the O_AS resolves and detects the received call request, and sends a call request rejection response to the S-CSCF to reject this call when determining that the call request carries the call completion indicator.
Step 5: the S-CSCF forwards the call request rejection response to the P-CSCF/MGCF/AGCF.
Step 6: the P-CSCF/MGCF/AGCF forwards the call request rejection response to the calling user A.

Fig. 6 shows a flowchart of filtering malicious call completion indicator in the CCBS service according to method Embodiment 4 of the disclosure. As shown in Fig. 6, in the example, a detection mode for call completion indicator is provided in the calling-side network device. When it is detected that the call request carries the call completion indicator, the call completion indicator is deleted from the call request and then the call request is forwarded; that is to say, in the embodiment, the calling user A is allowed to perform call access with a call request carrying the call completion indicator, but the call completion indicator has to be filtered out of the call request. The embodiment specifically comprises the following steps:
Step 1: the calling user A initiates a call request to the P-CSCF/MGCF/AGCF, wherein the call request carries a call completion indicator.
Step 2: after receiving the call request of the calling user A, the P-CSCF/MGCF/AGCF detects the received call request, judges whether the call request carries the call completion indicator information, deletes the call completion indicator from the call request when determining that the call request carries the call completion indicator, and then forwards the call request.

Those skilled in the art should understand that the technical scheme of the disclosure also can be implemented when the detection mechanism shown in Fig. 6 is provided in the S-CSCF or the O_AS and other network devices. As the implementations are similar to those shown in Figs. 4 and 5, the description of the implementation details is omitted here.

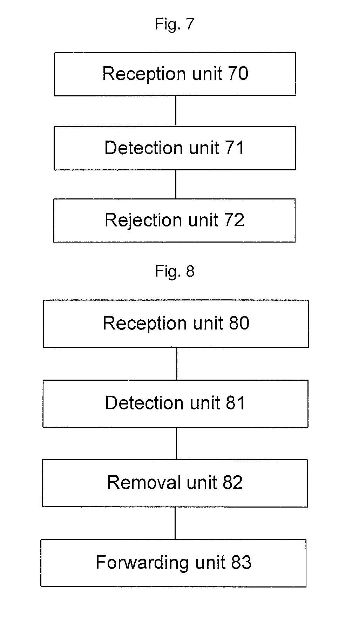

Fig. 7 shows a schematic diagram of a structure of the device for filtering malicious call completion indicator in the CCBS service according to the disclosure. As shown in Fig. 7, the device for filtering malicious call completion indicator in the CCBS service according to the embodiment comprises a reception unit 70, a detection unit 71 and a rejection unit 72, wherein
the reception unit 70 is configured to receive a call request;
the detection unit 71 is configured to detect the call request, and to trigger the rejection unit 72 when determining that the call request carries call completion indicator information. Here, the detection includes resolving the call request to determine whether the call completion indicator information is contained in the call request, or, detecting the field corresponding to the call completion indicator in the call request, and indicating that the call request contains the call completion indicator when the call request contains the field; and
the rejection unit 72 is configured to reject the current call request. The rejection unit 72 refuses to forward the current call request to a network element in the next stage.

Fig. 8 shows a schematic diagram of another structure of the device for filtering malicious call completion indicator in the CCBS service according to the disclosure. As shown in Fig. 8, the device for filtering malicious call completion indicator in the CCBS service according to the embodiment comprises a reception unit 80, a detection unit 81, a removal unit 82 and a forwarding unit 83, wherein
the reception unit 80 is configured to receive a call request;
the detection unit 81 is configured to detect the call request and to trigger the removal unit 82 when determining that the call request carries call completion indicator information. here, the detection includes resolving the call request to determine whether the call completion indicator information is contained in the call request, or, detecting the field corresponding to the call completion indicator in the call request, and indicating that the call request contains the call completion indicator when the call request contains the field;
the removal unit 82 is configured to remove the call completion indicator information in the call request; that is, to delete the corresponding call completion indicator information in the call request, and then to forward, by means of the forwarding unit 83, the call request with the call completion indicator being removed; and
the forwarding unit 83 is configured to forward the call request which has been processed by the removal unit 82.

Those skilled in the art should understand that the devices for filtering malicious call completion indicator in the CCBS service shown in Fig. 7 and Fig. 8 are provided for implementing the methods for filtering malicious call completion indicator in the CCBS service mentioned above. The function of each processing unit included in the device shown in Fig. 7 and Fig. 8 can be understood by reference to the description of the methods mentioned above, and can be implemented by a program running on a processor or can be implemented by a specific logic circuit.

The calling-side network device of the disclosure, such as S-CSCF, P-CSCF, MGCF, AGCF or AS, comprises the device shown in Fig. 7 or Fig. 8.

The above is only the preferred embodiments of the disclosure and not intended to limit the protection scope of the disclosure.

## Claims

1. A method for filtering a malicious call completion indicator in a call completion to busy subscriber (CCBS) service, comprising:
when a calling-side network device determines that a call request carries call completion indicator information,
rejecting the current call request, or
removing the call completion indicator information from the call request, and then forwarding the call request.

2. The method according to claim 1, wherein the calling-side network device comprises at least one of a serving call session control function entity (S-CSCF), a proxy call session control function entity (P-CSCF), a media gateway control function (MGCF), an access gateway control function entity (AGCF) and an application server (AS).

3. An apparatus for filtering a malicious call completion indicator in a call completion to busy subscriber (CCBS) service, comprising a reception unit, a detection unit and a rejection unit, wherein
the reception unit is configured to receive a call request;
the detection unit is configured to detect the call request and to trigger the rejection unit when determining that the call request carries call completion indicator information; and
the rejection unit is configured to reject the current call request.

4. An apparatus for filtering a malicious call completion indicator in a call completion to busy subscriber (CCBS) service, comprising a reception unit, a detection unit, a removal unit and a forwarding unit, wherein
the reception unit is configured to receive a call request;
the detection unit is configured to detect the call request and to trigger the removal unit when determining that the call request carries call completion indicator information;
the removal unit is configured to remove the call completion indicator information from the call request; and
the forwarding unit is configured to forward the call request which has been processed by the removal unit.

5. A calling-side network device, comprising a reception unit, a detection unit and a rejection unit, wherein
the reception unit is configured to receive a call request;
the detection unit is configured to detect the call request and to trigger the rejection unit when determining that the call request carries call completion indicator information; and
the rejection unit is configured to reject the current call request.

6. The calling-side network device according to claim 5, wherein the calling-side network device comprises at least one of a serving call session control function entity (S-CSCF), a proxy call session control function entity (P-CSCF), a media gateway control function (MGCF), an access gateway control function entity (AGCF) and an application server (AS).

7. A calling-side network device, comprising a reception unit, a detection unit, a removal unit and a forwarding unit, wherein
the reception unit is configured to receive a call request;
the detection unit is configured to detect the call request and to trigger the removal unit when determining that the call request carries call completion indicator information;
the removal unit is configured to remove the call completion indicator information from the call request; and
the forwarding unit is configured to forward the call request which has been processed by the removal unit.

8. The calling-side network device according to claim 7, wherein the calling-side network device comprises at least one of a serving call session control function entity (S-CSCF), a proxy call session control function entity (P-CSCF), a media gateway control function (MGCF), an access gateway control function entity (AGCF) and an application server (AS).
